# EUROPEAN PATENT SPECIFICATION

(11) **EP 1 836 585 B1**
(45) Date of publication and mention of the grant of the patent: **06.07.2011**
(21) Application number: 05849405.5
(22) Date of filing: 07.12.2005
(51) Int. Cl.: G06F 15/00, G06F 19/00

(54) **METHOD AND SYSTEM FOR ANALYZING STEAM TRAP DATA**
VERFAHREN UND SYSTEM ZUM ANALYSIEREN VON STREAM-TRAP-DATEN
PROCEDE ET SYSTEME POUR ANALYSER DES DONNEES DE PURGEUR DE VAPEUR

(30) Priority: 08.12.2004 US 6789; 08.08.2005 US 199111
(43) Date of publication of application: 26.09.2007
(73) Proprietor: ARMSTRONG INTERNATIONAL, INC., Stuart FL 34996 (US)
(72) Inventor: CHESKATY, Rex, Stuart, Fl 34994 (US); QUAKE, Tom, D., Three Rivers, MI 49093 (US); KERR, Robert, H., Ann Arbor, MI 49108 (US); HELLMAN, Michael, P., Portage, MI 49024 (US); GAINES, Michael, H., Kalamazoo, MI 49009 (US)
(74) Representative: Weber-Bruls, Dorothée
(86) International application number: PCT/US2005/044539
(87) International publication number: WO 2006/063196

(56) References cited:
- GB-A- 2 189 321
- SMARTWATCH: 'Continuous Leak Detection System' STEAM STORIES, TECHNICAL NEWS, PRODUCT UPDATES AND APPLICATIONS STORIES FOR THE BESTOBELL DISTRIBUTOR vol. 8, no. 1, page 11 PG-S, XP008076895

## Description

### CROSS-REFERENCE TO RELATED APPLICATIONS

This application claims priority to United States Patent Application Serial No. 11/199,111, filed August 8, 2005, which is a Continuation-In-Part of United States Patent Application Serial No. 11/006,789, filed December 8, 2004.

### BACKGROUND OF THE INVENTION

### Field of the Invention.

This invention relates in general to steam traps and the monitoring of steam traps.

### Description of Related Art.

Steam traps are equipment items common in factories, refineries and other industrial or commercial facilities that use steam line systems. Steam traps are installed in process steam lines and act to separate condensed steam, or "condensate," from the steam without allowing the steam to escape from the steam line system. The separated condensate is then typically recycled through condensate return lines to a boiler for conversion back to steam. During ideal operation, a steam trap removes condensate from process steam lines while preventing steam from escaping past the steam trap into the condensate return lines. If steam is allowed to pass through the steam trap into the condensate return lines, the result is a loss of valuable energy and a reduction in the efficiency of the steam line system. Further, if the steam trap is not removing condensate from the steam line system, and the condensate is allowed to remain in the steam lines, the result is a reduction in the efficiency of the steam system and an increase in the needed energy to maintain the same operations.

There are several well-known types of steam traps, including inverted bucket traps, float traps, thermostatic traps, and disc traps. Manufacturing facilities, refineries, and large buildings often are fitted with extensive systems of steam lines for heating and for process steam. Some of these facilities typically contain 1,000 or more steam traps. To promote efficient operation of the steam traps, some type of monitoring or inspection is often employed to detect malfunctioning traps, which may then be replaced or repaired.

Several different methods of monitoring the condition of a steam trap are known (for example in the documents GB-2189321-A and XP-8076895-A). One method uses a system with a battery powered probe to sense the temperature of a trap. The temperature measurement is then correlated with a particular condition of the steam trap. Another method uses a system with a battery powered probe in an inverted bucket steam trap to sense the presence of water in the trap. When the inverted bucket steam trap has water in it, the trap has a state or condition referred to as "prime." A properly operating inverted bucket trap must have a condition of prime if it is functioning properly. A requisite amount of water in the trap is indicative of proper steam trap operation. Such a steam trap monitoring system includes a probe extending into a steam trap, the probe being responsive to the level of condensate in the steam trap.

Another method of monitoring a steam trap uses a steam trap system including signal lights on the steam trap indicative of the process conditions in the trap. For proper monitoring, such a system requires visual inspection of the steam trap.

Another method to monitor a steam trap uses a hard wired system, which includes physical wiring that is threaded from a steam trap to a centrally located steam trap control station for receiving and storing data concerning the process conditions of the steam trap.

Still other methods for monitoring steam traps use systems suitable to transmit and report steam trap status data using radio wave signals.

### BRIEF SUMMARY OF THE INVENTION

This invention relates in general steam traps and the monitoring of steam traps and more specifically to a method of analyzing steam trap data and a system for analyzing steam trap data.
Independent claim 1 discloses a system for analyzing steam trap data according to the invention and independent claim 11 discloses a method of analyzing steam trap data according to the invention.

Various objects and advantages of this invention will become apparent to those skilled in the art from the following detailed description, when read in light of the accompanying drawings.

### BRIEF DESCRIPTION OF THE SEVERAL VIEWS OF THE DRAWINGS

Fig. 1 is a schematic view of a system for analyzing steam trap data in accordance with the present invention.

Fig. 2 is a flow chart of a method of analyzing steam trap data using the system of Fig. 1.

Fig. 3 is an expanded flow chart of a portion of the method of Fig. 2.

Fig. 4 is a schematic illustration, partially in phantom, of a steam trap and a remote monitoring system, suitable for use in the system of Fig. 1.

Fig. 5 is a schematic illustration showing openings for probes in a coupling of a connector block of the remote monitoring system of Fig. 4.

### DETAILED DESCRIPTION OF THE INVENTION

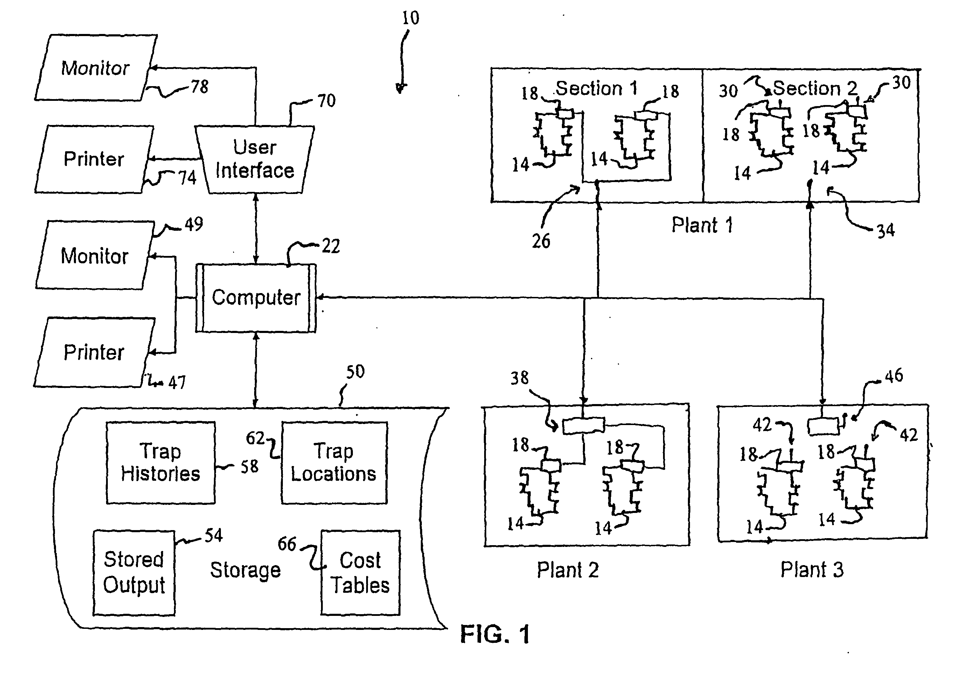

Referring now to the drawings, there is illustrated in Fig. 1 a system, indicated generally at 10, for analyzing steam trap data in accordance with the present invention. The system 10 includes a plurality of steam traps 14. As shown in Fig. 1 the steam traps 14 are located within multiple facilities, i.e., Plant 1, Plant 2, and Plant 3. Within Plant 1, the steam traps 14 are located within multiple portions of the facility, i.e., Sections 1 and 2 of Plant 1. It must be understood however that the system 10 may include any suitable number of steam traps 14 at any suitable number of locations. For example, the system 10 may include a single steam trap 14 in a single portion of a single facility, or any other number of steam traps in any number of portions of any number of facilities.

Each steam trap 14 is provided with a steam trap monitoring device 18. Each monitoring device is operable to monitor an operating parameter of a respective steam trap 14, transform the parameter into data, and transmit the data. The monitored parameter may include temperature, pressure, condensate flow rate, steam flow rate, fluid levels, or any other suitable parameter. The monitoring device 18 is shown as an integrated device with a sensor for monitoring a parameter, a transforming apparatus, such as a microprocessor, for transforming the parameter into data, and a transmitter for transmitting the data. The monitoring device 18 is shown as coupled to, or in direct contact with, the steam trap 14. It must be understood, however, that the monitoring device 18 may be any suitable device operating in any suitable manner. For example, the monitoring device 18 may be several separate modules including any suitable sensor, any suitable transforming apparatus, and any suitable transmitter. The sensor may be a direct sensor, such as a thermocouple or any suitable direct sensor, or an indirect sensor, such as an infrared scanner or any suitable indirect sensor. Also, the monitoring device 18 may be connected to equipment near the steam trap 14 instead of actually on the steam trap 14.

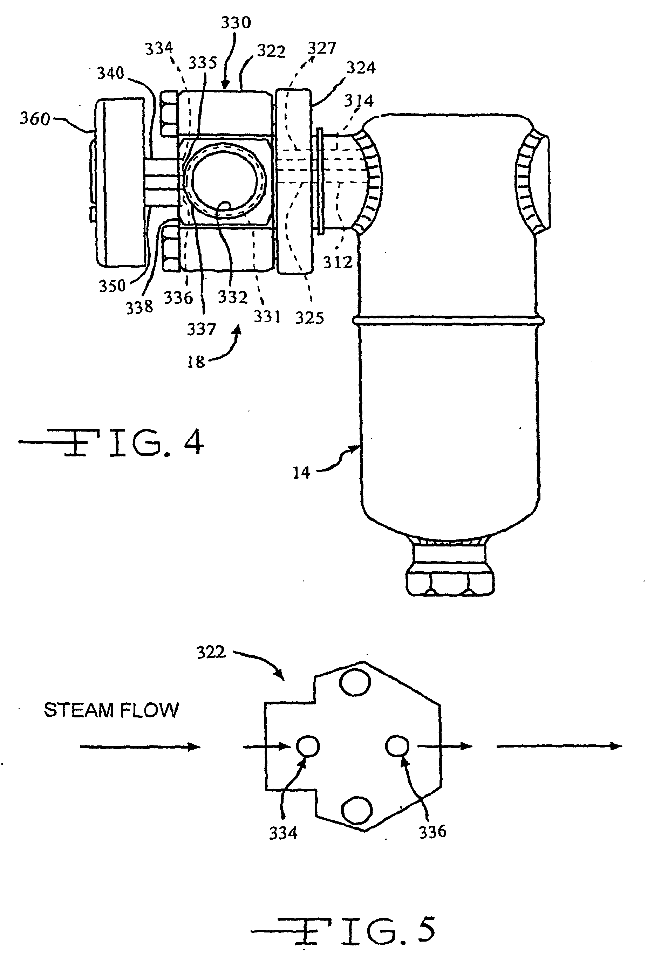

There is shown in Fig. 4 a more detailed illustration of the steam trap 14 and the monitoring device 18, suitable for use in the system of Fig. 1.

The depicted steam trap 14 is generally conventional and well known in the art, although it is to be understood that the present invention may be used with other types of steam traps. The steam trap 14 is connected to a live steam line (not shown) which supplies steam into the steam trap 14. The steam trap 14 is also connected to a condensate return line (not shown) to direct the condensate back to the steam generator, such as a boiler (not shown). The steam trap 14 is connected to the monitoring device 18.

In the embodiment shown, the monitoring device 18 includes a connector block 330, a temperature sensor device 340, an acoustic sensor device 350, and an electronic monitoring device 360.

The connector block 330 allows the steam trap 14 to be installed in a piping configuration. The connector block 330 can be manufactured out of any suitable material that can withstand normal steam trap working pressures and temperatures. In certain embodiments, the connector block 330 is made of stainless steel. It is to be understood that suitable piping connections for the connector block 330 can be NPT, PSPT, socket weld, butt weld, or any specialty connection that is acceptably used in the steam trap industry. In certain embodiments, the connector block 330 can have a strainer (not shown) for debris removal.

The connector block 330 is operatively connected to the steam trap 14 in a suitable manner as will be understood by those skilled in the art. In the embodiment shown, the connector block 330 includes a coupling 322 secured to a collar 324. The coupling 322 and collar 324 are in generally coaxial alignment with one of an inlet port 312 and an outlet port 314 in the steam trap 14, as in a manner understood by those skilled in the art. The collar 324 includes at least one steam inlet passage 325 and at least one steam outlet passage 327.

The coupling 322 of the connector block 330 includes at least one steam inlet passage 331 that receives steam from the upstream steam system. The steam inlet passage 331 is in communication with the inlet passage 325 in the collar 324, which, in turn, is in communication with the inlet port 312 in the steam trap 14. The coupling 322 in the connector block 330 also includes at least one steam outlet passage 332 that receives recovered steam from the steam outlet passage 327 in the collar 322 of the steam trap 14 and delivers the recovered steam to the downstream steam system. As is well understood; a portion of the supply of steam is diverted into the steam trap 14 where condensate is trapped or retained and then removed from the steam system.

In one aspect of the present invention, the connector block 330 defines a first orifice, or pocket, 334 and a second orifice, or pocket, 336, as shown in Fig. 5. The first and second pockets 334 and 336 each extend inward from an outer surface 338 of the connector block 330. The first and second pockets 334 and 336 terminate at closed ends 335 and 337, respectively. The closed ends 335 and 337 are in a spaced apart relationship to the inlet and outlet passages 331 and 332 in the connector block 330.

The first pocket 334 has an interior dimension that readily accepts the temperature sensor device 340. The temperature sensor 340 is located within the connector block 330 in the first pocket 334 near the inlet port 331 in the connector block 330. The temperature sensor device 340 monitors the temperature of the steam entering the steam trap 14.

The second pocket 336 has an interior dimension that readily accepts the acoustic sensor device 350. The acoustical sensor device 350 is located within the connector block 330 in the second pocket 336 in a suitable manner. The acoustical sensor device 350 monitors sound emitting from the steam trap during the service life of the steam trap 14.

The electronic monitoring device 360 is operatively connected to the temperature sensor device 340 and to the acoustical sensor device 350. The electronic monitoring device 360 receives data from the temperature sensor device 340 and the acoustic sensor device 350 and provides the monitoring logic for the individual trap 14 to which the monitoring device 360 is connected.

The electronic monitoring device 360 can include any suitable enclosure for encasing the sensing equipment required for operation of the monitoring device 18. The electronic monitoring device 360 includes any suitable programmable device capable of controlling the gathering, storage, and dissemination of process condition data. In certain embodiments, a suitable sensor controller is a PIC 16C322 chip from Microchip. It is to be understood that various input devices can be connected to the sensor controller to supply the sensor controller with data from the temperature sensor device 340 and from the acoustic sensor device 350. For example, electrodes (not shown) can be connected via lead lines (not shown) from the electronic monitoring device 360 to the temperature sensor device 340 and to acoustic sensor device 350 to provide input regarding the prime status (prime or no prime) of the steam trap 14. The electronic monitoring device 360 can be programmed to set a desired level for acceptable temperature and acoustical sensitivity.

Referring again to Fig. 1, the system 10 includes a computer 22. The computer is operable to receive the data from the steam trap monitoring devices 18. For example, the monitoring devices 18 in Section 1 of Plant 1 are directly hard wired to the computer 22, as indicated at 26. The monitoring devices 18 in Section 2 of Plant 1 are equipped with wireless transmitters, as indicated at 30, and the computer 22 is directly connected with a wireless receiver, as indicated at 34, to receive the data from the monitoring devices 18 in Section 2. In the present example, the computer 22 may be located in or near Plant 1, i.e., at the same facility, for efficiency of wiring. However, it must be understood that the computer 22 may be in any suitable location.

In another example, the monitoring devices 18 may include internet enabled transmitters. In this situation, all or some of the monitoring devices 18 in Plant 1 would be operable to transmit data to the computer 22 over the internet.

As used in this description, the term "internet enabled" is intended to include, but not be limited to, any device that can function to send or receive data over the internet, such as, for example, by having a transceiving device assigned a static IP address, or in any other suitable manner. Also, as used in this description, the term "transmitter" is intended to include, but not be limited to, any device that suitable to broadcast data, either over hard wired lines or wirelessly, and the term "receiver" is intended to include, but not be limited to, any device suitable to receive data, either over hard wired lines or wirelessly. The term "transceiver" is intended to include, but not be limited to, any device capable of performing as both a transmitter and a receiver. Further, it must be understood any device referred to as a "transmitter" or a "receiver" may be a "transceiver." Additionally, it is intended that any of these devices may be integral to or separate from but connected to any of the other devices with which they are described as functioning.

For further example, the monitoring devices 18 of Plant 2 are wired to a repeater 38. In the present example, the computer 22 is located remotely from Plant 2, i.e., at a different facility, and the repeater 38 may be an internet enabled transceiver, such as a router, or any other suitable transceiver. In another example, when the computer 22 is located within the Plant 2 the repeater 38 may by an intranet enabled transceiver, such as a hub, bridge, or switch, or any other suitable transceiver.

The monitoring devices 18 of Plant 3 are equipped with wireless transmitters, as indicated at 42. The wireless transmitters 42 are in communication with a wireless repeater 46. In the present example, the computer 22 is located remotely from Plant 3, and the wireless repeater 46 may be an internet enabled transceiver, such as a router, or any other suitable transceiver. In another example, when the computer 22 is located within the Plant 3 the wireless repeater 46 may be an intranet enabled transceiver, such as a hub, bridge, or switch, or any other suitable transceiver.

It must be understood, however, in either example for Plant 2 or Plant 3, that the repeater 38 or the wireless repeater 46 may be any suitable repeater, such as, for example, any transceiver operable to relay the data from a steam trap monitoring device 18 to the computer 22, or any other suitable repeater.

The computer 22 includes an algorithm for evaluating the data. The algorithm is suitable to provide an analysis of the data. As used in this description, the term "algorithm" is intended to include, but not be limited to, any program capable of making a substantive analysis of the data. The algorithm may include at least one program module. As used in this description, the term "program module" is indented to include, but not be limited to, any portion of a program, or sub-program, which is designed to make a specific analysis of data. For example, the algorithm may include:
an economic program module (e.g., cost analysis of steam trap operation);
an environmental program module (e.g., environmental impact of steam trap operation);
an operational program module (e.g., functional report of steam trap operation and/or related systems);
a predictive program module (e.g., prediction of future steam trap operation/failure/repair);
a remedial program module (e.g., repair work order and/or parts order, generation of repair schedule); or
any other suitable program module.

The system 10 may also include at least one output device, such as a printer 47 or a monitor 49, in communication with the computer 22. The output device, such as a printer 47 or a monitor 49, is operable to present output from the computer 22 to a user, such as by print-out or by display, where the output is based upon the algorithm evaluation of the data.

The system 10 further includes an optional storage device 50 in communication with the computer 22. As shown in Fig. 1, the storage device 50 is separate from the computer 22 and may be any suitable storage device, such as a network server, or internet sever. Further, it must be understood that the storage device 50 may be integral to the computer 22, such as a fixed disk drive, tape drive, dvd/cd rw, or any other suitable storage device. The storage device 50 is operable to store output from the computer 22, the output being based upon the algorithm evaluation of the data, as indicated at 54. The storage device 50 may include information that may be used by the computer 22 during the algorithm evaluation of the data. Such information could include the function history of one or more steam traps 14, as indicated at 58, the location of one or more steam traps 14, as indicated at 62, the cost of use/parts/repair of one or more steam trap 14, as indicated at 66, or any other suitable information.

The system 10 optionally also includes a user interface 70. As shown in Fig. 1 the user interface 70 is a second computer, such as a single user workstation, or any other suitable computer. It must be understood, however, that the user interface 70 may be a personal data assistant, mobile phone, or any other suitable interface. Further, the user interface 70 is shown as being connected to the computer 22 by a hard wire internet connection, with the user interface 70 being remotely located from the computer 22. It must be understood, however, that the user interface 70 and the computer 22 may connected in any suitable manner, such as by wired or wireless intra or internet. It also must be understood, that while the computer 22 and the user interface 70 are illustrated as two separate devices, the computer 22 and the user interface 70 may be integrated into a single unit.

The user interface 70 is suitable to receive output from the computer 22, the output being based upon the algorithm evaluation of the data. Further, the computer 22 and user interface 70 may be connected such that at least one program module may be executed upon the computer's receiving an execution request from the user interface 70. Also, the computer 22 can be configured such that the computer 22 will automatically execute at least one program module upon reception of the data from the steam trap monitoring device 18.

The user interface 70 may be in communication with at least one output device, such as a printer 74 or a monitor 78. The output device, such as the printer 74 or the monitor 78, is operable to present output from user interface 70, the output being based upon the algorithm evaluation of the data, to a user, such as by print-out or by display.

Further, the system 10 may be configured such that the computer 22 may store output to the storage device 50 and may retrieve the stored output for transmission to the user interface 70. Additionally, the computer 22 may be set up so that it transmits output to the user interface 70 automatically after analyzing the data from the monitoring device 18. Alternatively, the computer 22 may be set up so that the computer 22 transmits output to the user interface 70, or to one or more other user interfaces, not shown, upon receiving a request from the user interface 70.

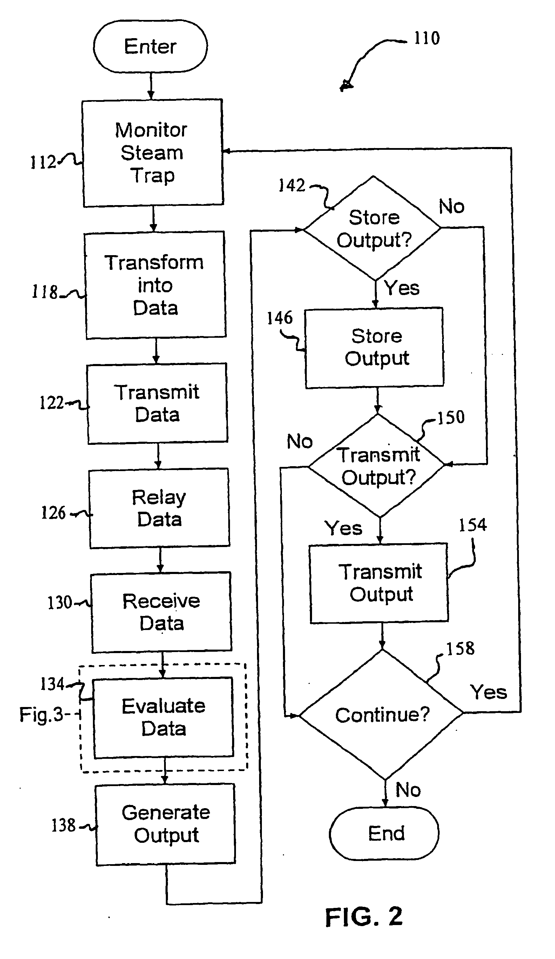

There is illustrated in Fig. 2 a method, indicated generally at 110, of analyzing steam trap data. The method 110 may use the system 10 of Fig. 1, or any other suitable system. The method 110 begins in functional block 112 where a parameter of a steam trap is monitored. For example, the parameter, such at the temperature of the steam trap, may be monitored by the steam trap monitoring device 18 of the system 10, or by any other suitable sensor or device.

The method 110 proceeds to functional block 118 where the parameter is transformed into data. For example, the parameter may be transformed into data by the steam trap monitoring device 18, or by a microprocessor, or by any other suitable device.

The method 110 proceeds to functional block 122 where the data is transmitted. For example, the data may be transmitted by the steam trap monitoring device 18, any suitable transmitter, or any suitable device.

The method 110 proceeds to functional block 126 where the data is relayed, i.e., received and transmitted. For example, the data may be relayed by the repeater 38, by the wireless repeater 46, by any suitable transceiver, such as any internet node, by any suitable internet enabled device, or by any other suitable device. It is to be understood that the relaying or repeating of the data transmission of not always necessary.

The method 110 proceeds to functional block 130 where the data is received. For example, the data may be received by the computer 22, or by any suitable device for receiving and evaluating the data.

The method 110 proceeds to functional block 134 where the data is evaluated. For example, the data may be evaluated by the computer 22, or by any suitable device.

The method 110 proceeds to functional block 134 where output is generated based at least in part upon the data from the steam trap. For example, the output may be generated by the computer 22 employing an algorithm for evaluating the data, or the output may be generated by any suitable device in any suitable manner.

The method 110 proceeds to decision block 142 where it is determined if the output is to be stored. For example, this determination may be made by preprogramming the computer 22, or by the computer's receiving direction from the user interface 70, or in any suitable manner.

If the output is to be stored, then the method 110 proceeds to functional block 146 where the data is stored. For example, the computer 22 may send the data to the storage device 50 for storage, or the data may be stored in any suitable manner by any suitable device. Then the method 110 proceeds to decision block 150. If the output is not to be stored, then the method 110 proceeds directly to decision block 150.

In decision block 150 it is determined if the output is to be transmitted. For example, this determination may be made by preprogramming the computer 22, or by the computer's receiving direction from the user interface 70, or in any other suitable manner.

If the output is to be transmitted, then the method 110 proceeds to functional block 154 where the output is transmitted. For example, the output may be transmitted to the user interface 70, or to any other suitable device. It must be understood that the output may be transmitted directly upon completion of the data evaluation or that if the output is stored, the output may be retrieved and transmitted at a later time. Then the method 110 proceeds to decision block 158. If the output is not to be transmitted, then the method 110 proceeds directly to decision block 158.

In decision block 158 it is determined if the method 110 is to continue. For example, this determination may be made by preprogramming the computer 22, or by the computer's receiving direction from the user interface 70, or in any suitable manner. If the method 110 is to continue, the method returns to functional block 112 and continues through as before. Otherwise, the method 110 ends.

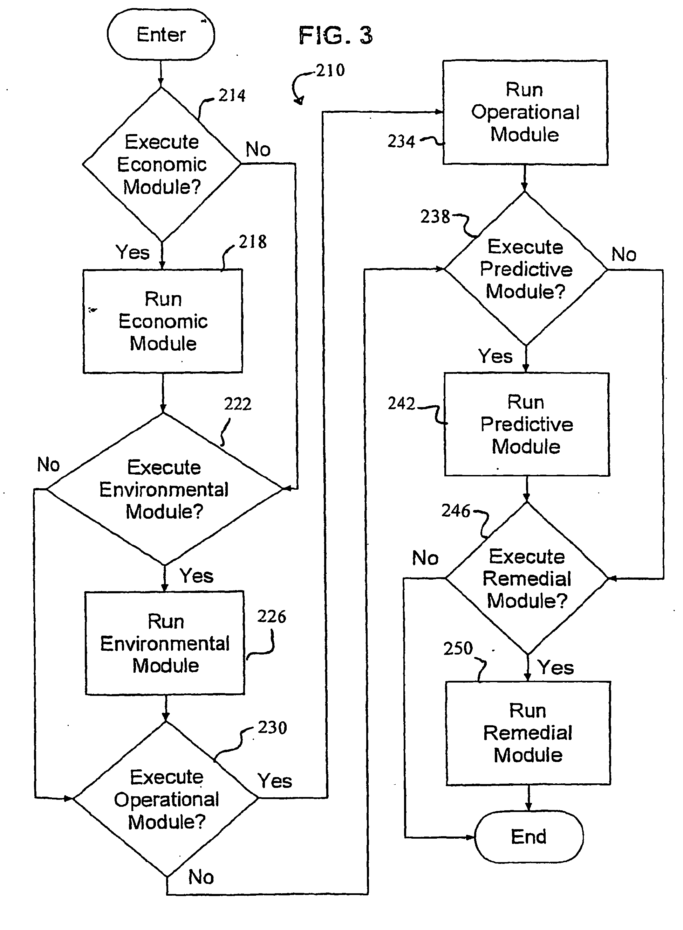

There is illustrated in Fig. 3 an expanded portion of the method 110 of Fig. 2, indicated generally at 210. The portion 210 is an expansion of the functional block 134 and the step of evaluating the data. In one embodiment of the present invention, the evaluation of the data is performed by an algorithm including a plurality of program modules. A program module may be executed automatically, for example by preprogramming the computer 22, or a program module may be executed at the direction of a user, for example by sending instruction via the user interface 70, or a program module may be executed in any suitable manner.

The portion 210 begins in decision block 214 where is it determined if an economic module is to be executed. If the economic module is to be executed the portion 210 proceeds to functional block 218 where the economic module is run. Then the portion 210 proceeds to decision block 222. If the economic module is not to be executed then the portion 210 proceeds directly to decision block 222.

For example, the economic module may use cost tables to generate cost reports based upon the current condition of steam trap operations. This information may then be used to generate a cost/benefit analysis of repairing ongoing problems. An example of such an analysis is a report indicating the exact cost in steam loss and energy cost incurred each day as a result of a malfunctioning steam trap.

In decision block 222 it is determined if an environmental module is to be executed. If the environmental module is to be executed the portion 210 proceeds to functional block 226 where the environmental module is run. Then the portion 210 proceeds to decision block 230. If the environmental module is not to be executed then the portion 210 proceeds directly to decision block 230.

For example, the environmental module may use information in efficiency tables, along with known emission values, to formulate environmental impact reports based upon the monitoring of the steam traps. The reports, for example, may include calculated values for CO2, SOX, or NOX emissions.

In decision block 230 it determined if an operational module is to be executed. If the operational module is to be executed the portion 210 proceeds to functional block 234 where the operational module is run. Then the portion 210 proceeds to decision block 238. If the operational module is not to be executed then the portion 210 proceeds directly to decision block 238.

For example, the operational module may use contact information in data tables, correlated to personnel to be contacted upon occurrence of certain events, to generate notification reports to specific persons under specific situations, such as to notify a manager of potential steam trap outages. Also, the operational module may use a set of preselected fields to create condition reports that indicate the present operating condition of the steam traps. These reports may then be sent to appropriate personnel for immediate use, or sent to storage to create a record of steam trap operation.

In decision block 238 it determined if a predictive module is to be executed. If the predictive module is to be executed the portion 210 proceeds to functional block 242 where the predictive module is run. Then the portion 210 proceeds to decision block 246. If the predictive module is not to be executed then the portion 210 proceeds directly to decision block 246.

For example, the predictive module may use steam trap history information, model specific information, or location information to generate reports of potential problems. This information may then be used to increase inspection or maintenance of particular steam traps, or to proactively replace steam traps as predicted to fail within a predetermined future time period.

In decision block 246 it determined if a remedial module is to be executed. If the remedial module is to be executed the portion 210 proceeds to functional block 250 where the remedial module is run. Then the portion 210 ends. If the remedial module is not to be executed then the portion 210 ends directly.

For example, the remedial module may use cost tables to calculate the cost of on going steam trap failures, and/or maintenance schedules to generate a repair schedule or create work orders for maintenance to repair particular steam traps. This information may be further integrated with maps of steam trap locations or steam trap model information for repair, or for the generation of supply orders for needed parts.

While the method 110 has been described as using a steam trap monitoring device to monitor a parameter of a steam trap, to transform the parameter into data, and to transmit the data, it must be understood, that the steam trap monitoring device may be any suitable device or any suitable group of modules, such as a separate sensor, microprocessor, and transmitted.

While the principle and mode of operation of this invention have been explained and illustrated with regard to particular embodiments, it must be understood, however, that this invention may be practiced otherwise than as specifically explained and illustrated without departing from the scope of the claims.

## Claims

1. A system for analyzing steam trap data comprising:
a plurality of steam traps (14), each steam trap (14) is provided with a steam trap monitoring device (18) including a sensor (340, 350) operable to monitor a parameter of a respective steam trap (14), a transforming apparatus (360) operable to transform the parameter into data, and a transmitter (30, 38, 42, 46) operable to transmit the data to a computer (22); and
a computer (22) operable to receive the data, the computer (22) including an algorithm for evaluating the data, wherein the algorithm includes at least one program module designed to make a specific analysis of the data and wherein the computer (22) is operable to transmit output to an output device (47, 49) such that the computer (22) is operable to transmit output to a user interface device (70) or such that the computer (22) includes a storage device (50) and is operable to store output to the storage device (50), wherein further the output is based upon the algorithm evaluation of the data, **characterized in that**
the steam trap monitoring device (18) includes a connector block, at least one first sensor device (340), at least one second sensor device (350) and an electronic monitoring device (360), wherein the connector block (330) defines a first pocket (334) and a second pocket (336) each extending inward from an outer surface (338) of the connector block (330) and terminating at closed ends (335, 337) being in spaced apart relationship to a steam inlet passage (331) and a steam outlet passage (332) in the connector block (330), and
wherein the first pocket (334), has an interior dimension that readily accepts the first sensor device (340) and the second pocket (336) has an interior dimension that readily accepts the second sensor device (350).

2. The system of claim 1, wherein the first sensor device is a temperature sensor device (340) and the second sensor device is an acoustic sensor device (350).

3. The system of Claim 1 or 2 wherein the algorithm includes an economic program module, an environmental program module, an operational program module, a predictive program module, or a remedial program module.

4. The system of Claim 1 or 2 wherein the steam trap monitoring device (18) includes an internet enabled transmitter (46) for transmitting the data to the computer (22).

5. The system of Claim 1 or 2 further comprising a transceiver (38) operable to relay the data from the steam trap monitoring device (18) to the computer (22).

6. The system of Claim 5 wherein the transceiver is an internet enabled transceiver (38).

7. The system of Claim 1 or 2 wherein the steam trap monitoring device (18) is at a first facility (1) and the computer (22) is at a second facility.

8. The system of Claim 1 or 2 wherein the computer (22) is operable to retrieve the stored output from the storage device (50) and operable to transmit the retrieved output to a user interface device (70).

9. The system of Claim 1 or 2 wherein the algorithm is automatically executed to evaluate the data upon the computer's receiving the data.

10. The system of Claim 1 or 2 wherein the algorithm includes a program module operable to be executed upon the computer (22) receiving an execution request from a user interface (70).

11. A method of analyzing steam trap data comprising the steps of:
(a) providing a plurality of steam traps, each steam trap being provided with a steam trap monitoring device including a sensor operable to monitor a parameter of a respective steam trap, a transforming apparatus operable to transform the parameter into data, and a transmitter operable to transmit the data to a computer and providing a computer operable to receive the data, the computer including an algorithm for evaluating the data, wherein the algorithm includes at least one program module
designed to make a specific analysis of the data,(b) using the steam trap monitoring device to monitor a parameter of a steam trap, transform the parameter into data, and transmit the data to the computer; and
(c) using the computer to receive the data, evaluate the data with the algorithm, and
(d) using the computer to transmit output based upon the algorithm evaluation of the data to an output device such that the computer is used to send output based upon the algorithm evaluation of the data to a storage device included by the computer for storage or such that the output is transmitted to a user interface device, **characterized in that**
the steam trap monitoring device is configured such that the steam trap monitoring device includes a connector block, at least one first sensor device, at least one second sensor device and an electronic monitoring device, wherein the connector block defines a first pocket and a second pocket each extending inward from an outer surface of the connector block and terminating at closed ends being in spaced apart relationship to a steam inlet passage and a steam outlet passage in the connector block, and
wherein the first pocket, has an interior dimension that readily accepts the first sensor device and the second pocket has an interior dimension that readily accepts the second sensor device.

12. The method of Claim 11 wherein the algorithm includes an economic assessment program module, an environmental assessment program module, an operational assessment program module, a predictive assessment program module, or a remedial assessment program module.

13. The method of Claim 11 further comprising prior to step (c), using a repeater to relay the data from the steam trap monitoring device to the computer.

14. The method of Claim 13 wherein the repeater is a transceiver operable to relay the data from the steam trap monitoring device to the computer.

15. The method of Claim 14 wherein the transceiver is an internet enabled transceiver.

16. The method of Claim 13 wherein the repeater is an internet node.

17. The method of Claim 11 further comprising after step (d), (e) using the computer to retrieve the output from the storage device and to transmit the output to a user interface device.

18. The method of Claim 11 wherein the algorithm includes a program module for evaluating the data.

19. The method of Claim 18 wherein step (c) includes automatically executing the program module to evaluate the data.

20. The method of Claim 19 further comprising prior to step (c), having a user direct the computer to execute the program module for evaluating the data.

## Patentansprüche

1. System zum Analysieren von Kondensatableiter-Daten, umfassend:
eine Mehrzahl von Kondensatableitern (14), wobei jeder Kondensatableiter mit einer Kondensatableiter-Überwachungsvorrichtung (18) versehen ist, einschließend einen Sensor (340, 350), einsetzbar zum Überwachen eines Parameters eines jeweiligen Kondensatableiters (14), eine Wandlereinrichtung (360), einsetzbar zum Umwandeln der Parameter in Daten und einen Sender (30, 38, 42, 46), einsetzbar zum Übertragen der Daten an einen Rechner (22); und
einen Rechner (22), einsetzbar zum Empfangen der Daten, wobei der Rechner (22) einen Algorithmus zum Auswerten der Daten einschließt, wobei der Algorithmus zumindest ein Programmmodul einschließt, das dazu ausgelegt ist, eine spezifische Analyse der Daten vorzunehmen und wobei der Rechner (22) einsetzbar ist zum Übertragen einer Ausgabe an eine Ausgabevorrichtung (47, 49), und zwar so, dass der Rechner (22) einsetzbar ist zum Übertragen einer Ausgabe an eine Benutzerschnittstellenvorrichtung (70) oder so, dass der Rechner (22) eine Speichervorrichtung (50) einschließt und einsetzbar ist zum Speichern einer Ausgabe auf der Speichervorrichtung (50), wobei weiter die Ausgabe auf der Algorithmusauswertung der Daten basiert, **dadurch gekennzeichnet, dass**
die Kondensatableiter-Überwachungsvorrichtung (18) einen Anschlussblock, zumindest eine erste Sensorvorrichtung (340), zumindest eine zweite Sensorvorrichtung (350) und eine elektronische Überwachungsvorrichtung (360) einschließt, wobei der Anschlussblock (330) eine erste Kammer (334) und eine zweite Kammer (336) definiert, die sich jeweils von einer äußeren Oberfläche (338) des Anschlussblocks (330) nach innen erstrecken und an geschlossenen Enden (335, 337) enden, die sich in einem beabstandeten Verhältnis zu einer Dampfeinlassöffnung (331) und einer Dampfauslassöffnung (332) in dem Anschlussblock (330) befinden, und
wobei die erste Kammer (334) eine innere Abmessung aufweist, die die erste Sensorvorrichtung (340) leicht aufnimmt und die zweite Kammer (336) eine innere Abmessung aufweist, die die zweite Sensorvorrichtung (350) leicht aufnimmt.

2. System nach Anspruch 1, wobei die erste Sensorvorrichtung eine Temperatursensorvorrichtung (340) ist und die zweite Sensorvorrichtung eine Schallsensorvorrichtung (350) ist.

3. System nach Anspruch 1 oder 2, wobei der Algorithmus ein Wirtschaftlichkeits-Programmmodul, ein Umwelt-Programmmodul, ein Betriebs-Programmmodul, ein Vorhersage-Programmmodul oder ein Abhilfe-Programmmodul einschließt.

4. System nach Anspruch 1 oder 2, wobei die Kondensatableiter-Überwachungsvorrichtung (18) einen internetfähigen Sender (46) zum Übertragen der Daten an den Rechner (22) einschließt.

5. System nach Anspruch 1 oder 2, weiterhin umfassend einen Transceiver (38), einsetzbar zum Weiterleiten der Daten von der Kondensatableiter-Überwachungsvorrichtung (18) an den Rechner (22).

6. System nach Anspruch 5, wobei der Transceiver ein internetfähiger Transceiver (38) ist.

7. System nach Anspruch 1 oder 2, wobei sich die Kondensatableiter-Überwachungsvorrichtung (18) in einer ersten Einrichtung (1) und der Rechner (22) in einer zweiten Einrichtung befindet.

8. System nach Anspruch 1 oder 2, wobei der Rechner (22) einsetzbar ist zum Abrufen der gespeicherten Ausgabe aus der Speichervorrichtung (50) und zum Senden der abgerufenen Ausgabe an eine Benutzerschnittstellenvorrichtung (70).

9. System nach Anspruch 1 oder 2, wobei der Algorithmus automatisch ausgeführt wird, um die Daten bei Empfang der Daten durch den Rechner auszuwerten.

10. System nach Anspruch 1 oder 2, wobei der Algorithmus ein Programmmodul einschließt, das einsetzbar ist, um ausgeführt zu werden, sobald der Rechner (22) eine Ausführungsanforderung von einer Benutzerschnittstelle (70) empfängt.

11. Verfahren zum Analysieren von Kondensatableiter-Daten, umfassend folgende Schritte:
(a) Bereitstellen einer Mehrzahl von Kondensatableitern, wobei jeder Kondensatableiter mit einer Kondensatableiter-Überwachungsvorrichtung versehen ist, einschließend einen Sensor, einsetzbar zum Überwachen eines Parameters eines jeweiligen Kondensatableiters, eine Wandlereinrichtung, einsetzbar zum Umwandeln der Parameter in Daten und einen Sender, einsetzbar zum Übertragen der Daten an einen Rechner, und Bereitstellen eines Rechners, einsetzbar zum Empfangen der Daten, wobei der Rechner einen Algorithmus zum Auswerten der Daten einschließt, wobei der Algorithmus zumindest ein Programmmodul einschließt, das dazu ausgelegt ist, eine spezifische Analyse der Daten vorzunehmen,
(b) Verwenden der Kondensatableiter-Überwachungsvorrichtung zum Überwachen eines Parameters eines Kondensatableiters, Umwandeln des Parameters in Daten und Übertragen der Daten an den Rechner, und
(c) Verwenden des Rechners zum Empfangen der Daten, Auswerten der Daten mit dem Algorithmus und
(d) Verwenden des Rechners zum Übertragen einer auf der Algorithmusauswertung der Daten basierenden Ausgabe an eine Ausgabevorrichtung, und zwar so, dass der Rechner dazu verwendet wird, eine auf der Algorithmusauswertung der Daten basierende Ausgabe an eine in dem Rechner enthaltene Speichervorrichtung zum Speichern zu senden oder so, dass die Ausgabe an eine Benutzerschnittstellenvorrichtung gesendet wird, **dadurch gekennzeichnet, dass**
die Kondensatableiter-Überwachungsvorrichtung so ausgeführt i s t, dass die Kondensatableiter-Überwachungsvorrichtung einen Anschlussblock, zumindest eine erste Sensorvorrichtung, zumindest eine zweite Sensorvorrichtung und eine elektronische Überwachungsvorrichtung einschließt, wobei der Anschlussblock eine erste Kammer und eine zweite Kammer definiert, die sich jeweils von einer äußeren Oberfläche des Anschlussblocks nach innen erstrecken und an geschlossenen Enden enden, die sich in einem beabstandeten Verhältnis zu einer Dampfeinlassöffnung und einer Dampfauslassöffnung in dem Anschlussblock befinden, und
wobei die erste Kammer eine innere Abmessung aufweist, die die erste Sensorvorrichtung leicht aufnimmt und die zweite Kammer eine innere Abmessung aufweist, die die zweite Sensorvorrichtung leicht aufnimmt.

12. Verfahren nach Anspruch 11, wobei der Algorithmus ein Programmmodul zur wirtschaftlichkeitsbezogenen Bewertung, ein Programmmodul zur umweltbezogenen Bewertung, ein Programmmodul zur betriebsbezogenen Bewertung, ein Programmmodul zur vorhersagebezogenen Bewertung oder ein Programmmodul zur abhilfebezogenen Bewertung einschließt.

13. Verfahren nach Anspruch 11, weiterhin umfassend vor Schritt (c) Verwenden eines Repeaters zum Weiterleiten der Daten von der Kondensatableiter-Überwachungsvorrichtung an den Rechner.

14. Verfahren nach Anspruch 13, wobei der Repeater ein Transceiver ist, einsetzbar zum Weiterleiten der Daten von der Kondensatableiter-Überwachungsvorrichtung an den Rechner.

15. Verfahren nach Anspruch 14, wobei der Transceiver ein internetfähiger Transceiver ist.

16. Verfahren nach Anspruch 13, wobei der Repeater ein Internet-Knoten ist.

17. Verfahren nach Anspruch 11, weiterhin umfassend nach Schritt (d) (e) Verwenden des Rechners zum Abrufen der Ausgabe aus der Speichervorrichtung und zum Übertragen der Ausgabe an eine Benutzerschnittstellenvorrichtung.

18. Verfahren nach Anspruch 11, wobei der Algorithmus ein Programmmodul zum Auswerten der Daten einschließt.

19. Verfahren nach Anspruch 18, wobei Schritt (c) das automatische Ausführen des Programmmoduls zum Auswerten der Daten einschließt.

20. Verfahren nach Anspruch 19, weiterhin umfassend vor Schritt (c) die Anweisung eines Benutzers an den Rechner, das Programmmodul zum Auswerten der Daten auszuführen.

## Revendications

1. Système pour l'analyse de données de purgeur de vapeur comprenant :
une pluralité de purgeurs de vapeur (14), chaque purgeur de vapeur (14) étant muni d'un dispositif de surveillance de purgeur de vapeur (18) comprenant un détecteur (340, 350) pouvant servir à surveiller un paramètre d'un purgeur de vapeur (14) respectif, un appareil de transformation (360) pouvant servir à transformer le paramètre en données, et un transmetteur (30, 38, 42, 46) pouvant servir à transmettre les données vers un ordinateur (22) ; et
un ordinateur (22) pouvant servir à recevoir les données, l'ordinateur (22) comprenant un algorithme pour évaluer les données, l'algorithme comprenant au moins un module de programme conçu pour réaliser une analyse spécifique des données et l'ordinateur (22) pouvant servir à transmettre des données de sortie vers un dispositif de données de sortie (47, 49) de sorte que l'ordinateur (22) peut servir à transmettre des données de sortie vers un dispositif d'interface utilisateur (70) ou de sorte que l'ordinateur (22) comprend un dispositif de stockage (50) et peut servir à stocker des données de sortie vers le dispositif de stockage (50), les données de sortie étant en outre basées sur l'évaluation algorithmique des données, **caractérisé en ce que**
le dispositif de surveillance de purgeur de vapeur (18) comprend un bloc de connexion, au moins un premier dispositif formant détecteur (340), au moins un second dispositif formant détecteur (350) et un dispositif de surveillance électronique (360), le bloc de connexion (330) définissant une première case (334) et une seconde case (336) s'étendant chacune vers l'intérieur depuis une surface extérieure (338) du bloc de connexion (330) et se terminant au niveau d'extrémités fermées (335, 337) qui se retrouvent en relation espacée par rapport à un passage d'entrée de vapeur (331) et à un passage de sortie de vapeur (332) dans le bloc de connexion (330), et
la première case (334) présente une dimension intérieure permettant d'accueillir facilement le premier dispositif formant détecteur (340) et la seconde case (336) présente une dimension intérieure permettant d'accueillir facilement le second dispositif formant détecteur (350).

2. Système selon la revendication 1, dans lequel le premier dispositif formant détecteur est un dispositif formant détecteur de température (340) et le second dispositif formant détecteur est un dispositif formant détecteur acoustique (350).

3. Système selon la revendication 1 ou 2, dans lequel l'algorithme comprend un module de programme économique, un module de programme environnemental, un module de programme opérationnel, un module de programme prédictif, ou un module de programme d'aide.

4. Système selon la revendication 1 ou 2, dans lequel le dispositif de surveillance de purgeur de vapeur (18) comprend un transmetteur (46) compatible avec Internet pour transmettre les données vers l'ordinateur (22).

5. Système selon la revendication 1 ou 2, comprenant en outre un émetteur-récepteur (38) pouvant servir à retransmettre les données depuis le dispositif de surveillance de purgeur de vapeur (18) vers l'ordinateur (22).

6. Système selon la revendication 5, dans lequel l'émetteur-récepteur est un émetteur-récepteur (38) compatible avec Internet.

7. Système selon la revendication 1 ou 2, dans lequel le dispositif de surveillance de purgeur de vapeur (18) se trouve au niveau d'une première installation (1) et l'ordinateur (22) se trouve au niveau d'une seconde installation.

8. Système selon la revendication 1 ou 2, dans lequel l'ordinateur (22) peut servir à retrouver les données de sortie stockées en provenance du dispositif de stockage (50) et peut servir à transmettre les données de sortie retrouvées vers un dispositif d'interface utilisateur (70).

9. Système selon la revendication 1 ou 2, dans lequel l'algorithme est exécuté de manière automatique pour évaluer les données dès réception de ces données par l'ordinateur.

10. Système selon la revendication 1 ou 2, dans lequel l'algorithme comprend un module de programme pouvant servir à être exécuté dès réception par l'ordinateur (22) d'une requête d'exécution en provenance d'une interface utilisateur (70).

11. Procédé d'analyse de données de purgeur de vapeur comprenant les étapes suivantes consistant à :
(a) fournir une pluralité de purgeurs de vapeur, chaque purgeur de vapeur étant muni d'un dispositif de surveillance de purgeur de vapeur comprenant un détecteur pouvant servir à surveiller un paramètre d'un purgeur de vapeur respectif, un appareil de transformation pouvant servir à transformer les paramètres en données, et un transmetteur pouvant servir à transmettre les données vers un ordinateur, et fournir un ordinateur pouvant servir à recevoir les données, l'ordinateur comprenant un algorithme pour évaluer les données, et l'algorithme comprenant au moins un module de programme conçu pour réaliser une analyse spécifique des données,
(b) utiliser le dispositif de surveillance de purgeur de vapeur pour surveiller un paramètre d'un purgeur de vapeur, transformer le paramètre en données, et transmettre les données à l'ordinateur ; et
(c) utiliser l'ordinateur pour recevoir les données, évaluer les données avec l'algorithme, et
(d) utiliser l'ordinateur pour transmettre des données de sortie, basées sur l'évaluation algorithmique des données, vers un dispositif de données de sortie, de sorte que l'ordinateur est utilisé pour envoyer des données de sortie, basées sur l'évolution algorithmique des données, vers un dispositif de stockage de l'ordinateur, en vue de leur stockage, ou de sorte que les données de sortie sont transmises vers un dispositif d'interface utilisateur, **caractérisé en ce que**
le dispositif de surveillance de purgeur de vapeur est configuré de sorte que le dispositif de surveillance de purgeur de vapeur comprend un bloc de connexion, au moins un premier dispositif formant détecteur, au moins un second dispositif formant détecteur et un dispositif de surveillance électronique, le bloc de connexion définissant une première case et une seconde case s'étendant chacune vers l'intérieur depuis une surface extérieure du bloc de connexion et se terminant au niveau d'extrémités fermées qui se trouvent en relation espacée par rapport à un passage d'entrée de vapeur et à un passage de sortie de vapeur dans le bloc de connexion, et
la première case présentant une dimension intérieure permettant d'accueillir facilement le premier dispositif formant détecteur et la seconde case présentant une dimension intérieure permettent d'accueillir facilement le second dispositif formant détecteur.

12. Procédé selon la revendication 11, dans lequel l'algorithme comprend un module de programme d'évaluation économique, un module de programme d'évaluation environnementale, un module de programme d'évaluation opérationnel, un module de programme d'évaluation prédictif, ou un module de programme d'évaluation d'aide.

13. Procédé selon la revendication 11, comprenant en outre, préalablement à l'étape (c), l'étape consistant à utiliser un répéteur pour retransmettre les données en provenance du dispositif de surveillance de purgeur de vapeur vers l'ordinateur.

14. Procédé selon la revendication 13, dans lequel le répéteur est un émetteur-récepteur pouvant servir à retransmettre les données en provenance du dispositif de surveillance de purgeur de vapeur vers l'ordinateur.

15. Procédé selon la revendication 14, dans lequel l'émetteur-récepteur est un émetteur-récepteur compatible avec Internet.

16. Procédé selon la revendication 13, dans lequel le répéteur est un noeud Internet.

17. Procédé selon la revendication 11, comprenant, après l'étape (d), l'étape (e) consistant à utiliser l'ordinateur pour retrouver les données de sortie en provenance du dispositif de stockage et pour transmettre les données de sortie vers un dispositif d'interface utilisateur.

18. Procédé selon la revendication 11, dans lequel l'algorithme comprend un module de programme pour évaluer les données.

19. Procédé selon la revendication 18, dans lequel l'étape (c) comprend l'exécution automatique du module de programme pour évaluer les données.

20. Procédé selon la revendication 19, comprenant, préalablement à l'étape (c), l'étape consistant en ce qu'un utilisateur demande à l'ordinateur d'exécuter le module de programme pour évaluer les données.
